# FASCICULE DE BREVET EUROPEEN

(11) **EP 1 735 205 B1**
(45) Date de publication et mention de la délivrance du brevet: **09.04.2008**
(21) Numéro de dépôt: 05733225.6
(22) Date de dépôt: 24.02.2005
(51) Int. Cl.: B62D 21/15, B62D 21/11

(54) **BERCEAU DE MOTEUR A COMPORTEMENT AU CHOC AMELIORE, COQUILLE DE BERCEAU ET VEHICULE CORRESPONDANTS**
MOTORTRÄGER MIT VERBESSERTER AUFPRALLREAKTION, ENTSPRECHENDER TRÄGERMANTEL UND FAHRZEUG
ENGINE CRADLE WITH IMPROVED IMPACT RESPONSE, CORRESPONDING CRADLE SHELL AND VEHICLE

(30) Priorité: 05.04.2004 FR 0403531
(43) Date de publication de la demande: 27.12.2006
(73) Titulaire: Auto Chassis International SNC, 72086 Le Mans Cédex 9 (FR)
(72) Inventeur: CHABROL, Thierry, F-78150 Le Chesnay (FR); ZONGHETTI, Roland, F-78190 Trappes (FR); ROULIN, François, F-92000 Nanterre (FR)
(74) Mandataire: Guyon, Rodolphe C.
(86) Numéro de dépôt international: PCT/FR2005/000447
(87) Numéro de publication internationale: WO 2005/108190

(56) Documents cités:
- EP-A- 0 987 166
- WO-A-99/32346
- US-A1- 2001 020 774

## Description

Le domaine de l'invention est celui de l'industrie automobile. Plus précisément, l'invention concerne les berceaux supportant les moteurs de véhicules automobiles.

Selon une technique courante EP 0987166 les berceaux de moteur comprennent deux coquilles réalisées en tôle emboutie et assemblées entre elles.

L'une des fonctions de ces berceaux est de supporter les efforts engendrés par le couple moteur lors de phases d'accélération ou de décélération du véhicule.

En outre, en cas de choc frontal du véhicule à grande vitesse, le berceau avant est un élément important de l'absorption d'énergie par déformation. Pour qu'il puisse remplir cette fonction, le berceau doit pouvoir reculer (dans l'espace indiqué précédemment), ceci jusqu'à venir en appui sur la caisse pour y transmettre les efforts.

Dans le cas des berceaux réalisés par emboutissage de tôle, la partie arrière du berceau qui vient en contact avec la caisse présente une forme très arrondie. Une telle forme arrondie est due à la technique d'emboutissage utilisée pour la fabrication des coquilles constituant le berceau. En effet, une telle forme arrondie permet une déformation progressive de la tôle et favorise l'engagement et le dégagement des matrices d'emboutissage l'une par rapport à l'autre.

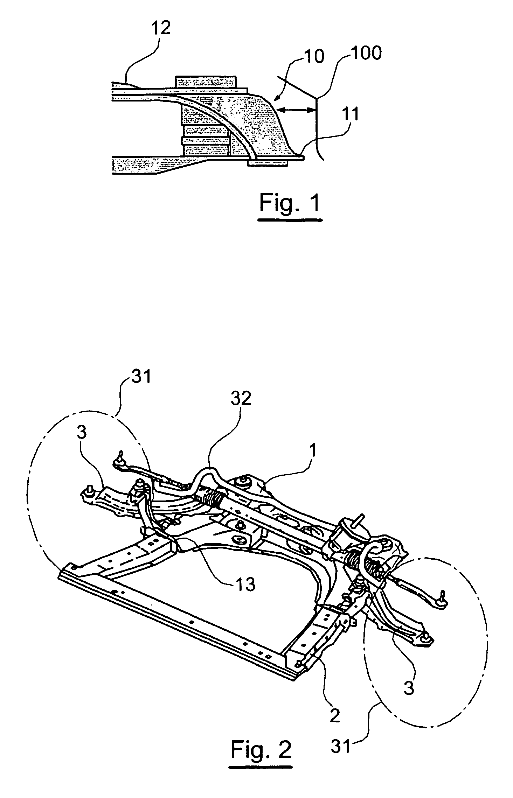

Ceci est illustré par la figure 1 qui procure une vue de côté d'un berceau traditionnel.

Tel que cela apparaît, le bord arrière 10 du berceau présente une courbure entre une surface de base 11 de la coquille supérieure et un rebord 12 d'assemblage de cette dernière avec une coquille inférieure.

Or, comme on le remarque, la caisse 100 (représentée symboliquement) présente généralement, dans la zone de contact potentielle avec le berceau, une surface verticale.

Aussi, dans certains cas, la surface arrondie du berceau contre la surface verticale de la caisse peut être la cause d'un glissement du berceau sous la caisse, au risque d'entraîner une rupture des fixations du berceau. En tout état de cause, dans une telle situation, la fonction d'absorption d'énergie du berceau n'est exercée que de façon incomplète, voire pas exercée du tout.

L'invention a notamment pour objectif de pallier cet inconvénient de l'art antérieur.

Plus précisément, l'invention a pour objectif de proposer un berceau en tôle emboutie qui présente un comportement au choc amélioré par rapport au berceau classique de l'art antérieur.

L'invention a également pour objectif de fournir un tel berceau qui n'entraîne pas d'augmentation de poids.

L'invention a aussi pour objectif de fournir un tel berceau qui soit simple de conception, facile à fabriquer et à mettre en oeuvre.

Ces objectifs, ainsi que d'autres qui apparaîtront par la suite, sont atteints grâce à l'invention qui a pour objet un berceau de véhicule automobile, du type comprenant au moins une coquille en tôle emboutie présentant un bord arrière destiné à être monté au voisinage d'une paroi essentiellement verticale de la caisse, caractérisé en ce qu'au moins une portion dudit bord arrière de ladite coquille, ou de l'une desdites coquilles, définit une surface d'appui susceptible de venir en contact, lors d'un choc encaissé par ledit véhicule, avec ladite paroi essentiellement verticale de la caisse.

Ainsi, le berceau présente un comportement amélioré aux chocs, en particulier en cas de choc frontal d'un véhicule à grande vitesse.

En effet, le berceau selon l'invention recule en cas de choc frontal important et vient s'appuyer, avec un appui plan, sur la caisse du véhicule pour transmettre à celle-ci les efforts encaissés.

Ce résultat est donc obtenu grâce à l'invention, en évitant un mauvais accostage du berceau contre la caisse, en particulier en cas de glissement du berceau sous la caisse. Ceci est permis grâce à la surface d'appui définie par le bord arrière, ce dernier présentant une face sensiblement parallèle à celle de la caisse en vue de produire un appui franc, sans ripage possible.

Selon une solution préférée, ladite coquille présente un rebord définissant un plan d'assemblage avec une autre coquille, ladite ou lesdites portions correspondant chacune à au moins une excroissance ménagée dans ledit rebord.

De cette façon, on peut réaliser cette excroissance à l'aide d'une matrice d'emboutissage de la coquille correspondante.

La surface d'appui susceptible de venir en contact avec la caisse lors d'un choc peut donc être obtenue à moindre coût, ceci sans ajout de matière ou d'une pièce qui engendrerait une augmentation de poids.

Avantageusement, ladite excroissance est formée par une déformation dudit bord arrière de façon que ladite ou lesdites portions présentent une forme essentiellement en U.

Dans ce cas, ladite forme en U de ladite ou desdites portions comprend préférentiellement ladite forme en U de ladite ou desdites excroissances comprend deux montants reliés entre eux par un bord supérieur essentiellement plat.

On peut ainsi augmenter la surface d'appui susceptible de venir en contact avec la caisse, ceci autant que de besoin en fonction des caractéristiques de comportement aux chocs que l'on souhaite obtenir.

Selon une solution avantageuse, ladite ou lesdites excroissances s'étendent entre ladite ou lesdites portions et ladite surface de base de ladite coquille de telle sorte que ledit U et ladite surface de base soient reliés par au moins une ligne s'inscrivant sensiblement dans le plan de ladite surface de base.

On obtient de cette façon un comportement aux chocs optimisé, en évitant un éventuel effet de levier qui pourrait apparaître si l'excroissance était décalée verticalement par rapport à la surface de base de la coquille.

Avantageusement, ladite ou lesdites excroissances présentent une section progressive qui s'élargit en direction de ladite surface de base.

Ainsi, en cas de choc, la diffusion des contraintes mécaniques liées au choc est améliorée : les efforts subis sont transférés de l'excroissance à l'ensemble de la coquille, ce qui permet une absorption progressive du choc.

Selon une solution avantageuse, ladite surface de base et ledit rebord d'assemblage sont reliés par une paroi de liaison, ladite ou lesdites excroissances étant bordées par deux surfaces incurvées qui relient ladite excroissance à ladite paroi de liaison.

Ceci contribue également à l'absorption progressive d'un choc éventuel.

Préférentiellement, le berceau comprend une portion définissant une surface d'appui au voisinage de chacune des extrémités dudit bord arrière.

Le berceau présente de cette façon un comportement amélioré aux chocs, quelque soit la direction du choc ou quasiment.

Selon une autre caractéristique, ledit berceau comprend au moins une surface de base présentant un bossage au voisinage de l'un au moins de ses bords, dit bord proximal, de ladite surface de base, ledit bossage étant ménagé sur une face, dite face interne, de ladite surface de base, ladite coquille étant obtenue par un procédé comprenant :
- au moins une étape d'emboutissage au cours de laquelle est réalisé ledit bossage ;
- au moins une étape de repliement dudit bord proximal en direction dudit bossage, jusqu'à ce que ledit bord proximal s'étende sensiblement parallèlement à ladite surface interne, ladite étape de repliement étant réalisée en exerçant au voisinage dudit bord proximal, une force de contre appui sur la face opposée à ladite surface interne de ladite surface de base.

Ainsi, le berceau est réalisé selon une technique de fabrication permettant de replier un bord sur une pièce en tôle dont la structure ne permet pas la mise en place d'une matrice de pliage selon la technique traditionnelle.

Jusqu'à présent, les emboutisseurs ont toujours renoncé à procéder à un tel pli, ne pouvant justement utiliser classiquement les matrices de pliage.

On évite de cette façon de devoir rapporter, comme c'est le cas avec les berceaux antérieurs, une pièce de renfort sur le bord voisin du bossage.

Ainsi, on peut donc obtenir un gain de poids et une économie sur le coût de fabrication du berceau, celui-ci présentant malgré tout une capacité d'endurance similaire à celle d'un berceau équipé d'une pièce de renfort sur le bord en question.

Avantageusement, ledit bord proximal est un des bords d'une fenêtre destinée à former un passage pour une biellette de reprise d'un couple moteur.

Dans ce cas, le berceau comprend préférentiellement deux coquilles assemblées entre elles et présentant chacune un bossage destiné à former une surface d'appui pour une extrémité de ladite biellette, les bords inférieur et supérieur de ladite fenêtre étant tous deux repliés sensiblement parallèlement à la surface de base de la coquille au voisinage de laquelle ils s'étendent.

L'invention concerne également une coquille de berceau, du type en tôle emboutie et présentant un bord arrière destiné à être monté au voisinage d'une paroi essentiellement verticale de la caisse, caractérisée en ce qu'au moins une portion dudit bord arrière de ladite coquille définit une surface d'appui susceptible de venir en contact, lors d'un choc encaissé par ledit véhicule, avec ladite paroi essentiellement verticale de la caisse.

L'invention concerne aussi un véhicule équipé d'au moins un berceau comprenant au moins une coquille en tôle emboutie présentant un bord arrière destiné à être monté au voisinage d'une paroi essentiellement verticale de la caisse, caractérisé en ce qu'au moins une portion dudit bord arrière de ladite coquille, ou de l'une desdites coquilles, définit une surface d'appui susceptible de venir en contact, lors d'un choc encaissé par ledit véhicule, avec ladite paroi essentiellement verticale de la caisse.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue de côté du bord arrière d'un berceau selon l'art antérieur ;
- la figure 2 est une vue en perspective d'un berceau selon l'invention ;
- la figure 3 est une vue partielle de la partie arrière d'un berceau avant de véhicule selon l'invention ;
- la figure 4 est une vue en perspective d'un berceau avant de véhicule selon l'invention ;
- la figure 5 est une vue en perspective d'un dispositif en cours d'exécution d'une étape d'un procédé de fabrication selon l'invention.

Tel que déjà mentionné précédemment, le principe de l'invention consiste à réaliser l'une des coquilles du berceau de façon qu'elle présente un bord arrière avec une portion définissant une surface d'appui susceptible de venir en contact, lors d'un choc, avec une paroi essentiellement verticale de la caisse.

On rappelle, en référence à la figure 2, qu'un tel berceau, autrement appelé « mini berceau » par l'homme du métier, est solidarisé à la caisse du véhicule en partie arrière et, en partie avant, à un absorbeur de chocs 2 ou « add-on » fixé sur des platines 13 du berceau.

En outre, un tel berceau est couplé à des bras inférieurs 3 supports de roues ou portant des moyens supports de roues 31 (représentés symboliquement), une barre anti-dévers 32 reliant ces bras et étant maintenue sur le berceau.

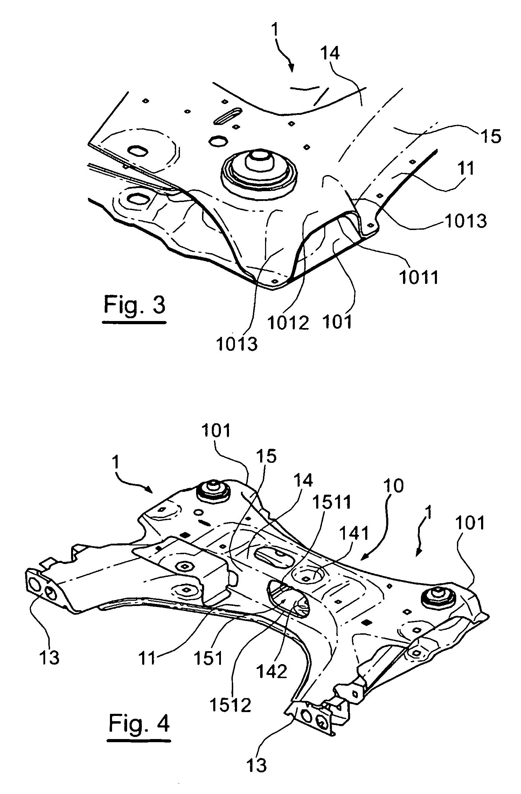

Selon le présent mode de réalisation de l'invention illustré par la figure 3, le bord arrière de la coquille supérieure 1 présent une portion selon l'invention à chacune de ses extrémités, chaque portion correspondant à une excroissance 101 ménagée dans le rebord 11 formant un plan d'assemblage avec la coquille inférieure 4 du berceau.

Tel que cela apparaît, chacune des excroissances 101 présente une section ayant une forme essentiellement en U, ce U étant en l'occurrence inversé avec un bord supérieur plat 1011.

De plus, cette excroissance s'étend de façon à présenter un plan supérieur 1012 qui s'inscrit dans le plan de la surface de base 14 de la coquille supérieure.

On note que chaque excroissance 101 présente une section qui s'élargit progressivement en direction de la surface de base 14, ceci en présentant des parois latérales incurvées 1013 en direction du rebord de liaison 15 de la coquille qui s'étend entre la surface de base 14 et le rebord d'assemblage 11.

La figure 4 est une vue en perspective d'un berceau présentant une excroissance 101 à chacune des extrémités de son bord arrière.

Par ailleurs, tel que cela apparaît clairement, la paroi de liaison 15 reliant la surface de base 14 et le rebord d'assemblage 11 de la coquille supérieure 1 présente une ouverture 151 réalisée au voisinage d'un bossage 141 obtenu sur la face interne de la coquille supérieure, lors de l'emboutissage de celle-ci, et d'un bossage 142 que présente la coquille inférieure 4.

Cette ouverture présente un bord supérieur 1511 et un bord inférieur 1512 qui sont repliés de façon à créer une double épaisseur respectivement avec la surface de base de la coquille supérieure et avec la surface de base de la coquille inférieure.

Ces plis sont obtenus après la phase d'emboutissage en exerçant une force de contre-appui sur la face externe de la coquille supérieure.

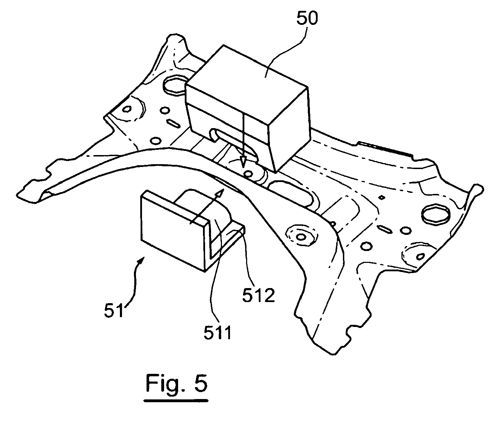

Pour cela, on met en oeuvre un dispositif tel que celui apparaissant sur la figure 5.

Selon le mode de réalisation préférentiel illustré par cette figure, cette étape du procédé de fabrication est conduite en introduisant une matrice partielle 50 à l'intérieur de la coquille puis en introduisant au travers de l'ouverture obtenue grâce à l'outil de poinçonnage, un outil de pliage 51.

Cet outil de pliage 51 comprend une partie active de pliage 511 qui entraîne le repliement du bord proximal 151 au fur et à mesure de l'introduction de l'outil dans l'ouverture.

L'outil de pliage comprend en outre un élément de contre-appui 512 destiné à venir en appui sur la surface externe de la surface de base 14 (par opposition à la surface interne contre laquelle on met en appui la matrice partielle 50).

L'élément de contre-appui 512 est prévu pour venir en appui sur la surface de base 14 avant que l'outil de pliage ne provoque le repliement du bord proximal, l'élément de contre-appui restant au contact de la surface de base de la coquille pendant toute l'étape de pliage.

## Revendications

1. Berceau de véhicule automobile, du type comprenant au moins une coquille (1) en tôle emboutie présentant un bord arrière destiné à être monté au voisinage d'une paroi (100) essentiellement verticale de la caisse, **caractérisé en ce qu'**au moins une portion (101) dudit bord arrière de ladite coquille (1), ou de l'une desdites coquilles, définit une surface d'appui de venir en contact, lors d'un choc encaissé par ledit véhicule, avec ladite paroi (100) essentiellement verticale de la caisse.

2. Berceau de véhicule automobile selon la revendication 1, **caractérisé en ce que** ladite coquille (1) présente un rebord (11) définissant un plan d'assemblage avec une autre coquille (4), et **en ce que** ladite ou lesdites portions (101) correspondent chacune à au moins une excroissance ménagée dans ledit rebord (11).

3. Berceau de véhicule automobile selon la revendication 2, **caractérisé en ce que** ladite excroissance est formée par une déformation dudit bord arrière de façon que ladite ou lesdites portions (101) présente une forme essentiellement en U.

4. Berceau de véhicule automobile selon la revendication 3, **caractérisé en ce que** la forme en U de ladite ou desdites portions (101) comprend deux montants reliés entre eux par un bord supérieur essentiellement plat (1011).

5. Berceau de véhicule automobile selon l'une des revendications 3 et 4, **caractérisé en ce que** ladite ou lesdites excroissances s'étendent entre ladite ou lesdites portions (101) et une surface de base (14) de ladite coquille (1) de telle sorte que ledit U et ladite surface de base (14) soient reliés par au moins une ligne s'inscrivant sensiblement dans le plan de ladite surface de base (14).

6. Berceau de véhicule automobile selon l'une quelconque des revendications 2 à 5, **caractérisé en ce que** ladite ou lesdites excroissances présentent une section progressive qui s'élargit en direction de ladite surface de base (14).

7. Berceau de véhicule automobile selon l'une des revendications 2 à 6, **caractérisé en ce que** ladite surface de base (14) et ledit rebord d'assemblage (11) sont reliés par une paroi de liaison (15), et **en ce que** ladite ou lesdites excroissances sont bordées par deux surfaces incurvées (1013) qui relient ladite excroissance à ladite paroi de liaison (15).

8. Berceau de véhicule automobile selon l'une quelconque des revendications 1 à 7, **caractérisé en ce qu'**il comprend une portion (101) définissant une surface d'appui au voisinage de chacune des extrémités dudit bord arrière.

9. Berceau de véhicule automobile selon l'une quelconque des revendications 1 à 8, incluant au moins une coquille (1) comprenant au moins une surface de base (14) présentant un bossage (141) au voisinage de l'un au moins de ses bords, dit bord proximal (1511), de ladite surface de base (14), ledit bossage (141) étant ménagé sur une face, dite face interne, de ladite surface de base (14), **caractérisé en ce que** ladite coquille est obtenue par un procédé comprenant :
- au moins une étape d'emboutissage au cours de laquelle est réalisé ledit bossage (141) ;
- au moins une étape de repliement dudit bord proximal (1511) en direction dudit bossage (141), jusqu'à ce que ledit bord proximal (1511) s'étende sensiblement parallèlement à ladite surface interne, ladite étape de repliement étant réalisée en exerçant au voisinage dudit bord proximal (1511), une force de contre appui sur la face opposée à ladite surface interne de ladite surface de base (14).

10. Berceau de véhicule automobile selon la revendication 9, **caractérisé en ce que** ledit bord proximal (1511) est un des bords d'une fenêtre (151) destinée à former un passage pour une biellette de suspension d'un moteur.

11. Berceau de véhicule automobile selon les revendications 9 et 10, **caractérisé en ce qu'**il comprend deux coquilles (1), (4) assemblées entre elles et présentant chacune un bossage (141), (142) destiné à former une surface d'appui pour une extrémité de ladite biellette, les bords inférieur (1512) et supérieur (1511) de ladite fenêtre (151) étant tous deux repliés sensiblement parallèlement à la surface de base de la coquille au voisinage de laquelle ils s'étendent.

12. Coquille (1) de berceau, du type en tôle emboutie et présentant un bord arrière destiné à être monté au voisinage d'une paroi (100) essentiellement verticale de la caisse, **caractérisée en ce qu'**au moins une portion (101) dudit bord arrière de ladite coquille (1) définit une surface d'appui susceptible de venir en contact, lors d'un choc encaissé par ledit véhicule, avec ladite paroi (100) essentiellement verticale de la caisse.

13. Véhicule équipé d'au moins un berceau comprenant au moins une coquille (1) en tôle emboutie présentant un bord arrière destiné à être monté au voisinage d'une paroi (100) essentiellement verticale de la caisse, **caractérisé en ce qu'**au moins une portion (101) dudit bord arrière de ladite coquille (1), ou de l'une desdites coquilles, définit une surface d'appui susceptible de venir en contact, lors d'un choc encaissé par ledit véhicule, avec ladite paroi (100) essentiellement verticale de la caisse.

## Claims

1. Motor vehicle cradle, of the type comprising at least one pressed sheet shell (1) that has a rear edge intended to be mounted near an essentially vertical wall (100) of the body, **characterized in that** at least a portion (101) of the,said rear edge of the said shell (1), or of one of the said shells, defines a bearing surface capable of coming into contact, when the said vehicle absorbs an impact, with the said essentially vertical wall (100) of the body.

2. Motor vehicle cradle according to Claim 1, **characterized in that** the said shell (1) exhibits a rim (11) defining a plane for assembling with another shell (4), and **in that** the said portion or portions (101) each correspond to at least one protrusion formed in the said rim (11).

3. Motor vehicle cradle according to Claim 2, **characterized in that** the said protrusion is formed by a deformation of the said rear edge in such a way that the said portion or portions (101) is or are essentially U-shaped.

4. Motor vehicle cradle according to Claim 3, **characterized in that** the U shape of the said portion or portions (101) comprises two uprights joined together by an essentially flat top edge (1011).

5. Motor vehicle cradle according to one of Claims 3 and 4, **characterized in that** the said protrusion or protrusions run between the said portion or portions (101) and a base surface (14) of the said shell (1) in such a way that the said U and the said base surface (14) are connected by at least one line which falls more or less within the plane of the said base surface (14).

6. Motor vehicle cradle according to any one of Claims 2 to 5, **characterized in that** the said protrusion or protrusions has or have a progressive cross section widening towards the said base surface (14).

7. Motor vehicle cradle according to one of Claims 2 to 6, **characterized in that** the said base surface (14) and the said assembly rim (11) are connected by a connecting wall (15) and **in that** the said protrusion or protrusions is or are bordered by two curved surfaces (1013) which connect the said protrusion to the said connecting wall (15).

8. Motor vehicle cradle according to any one of Claims 1 to 7, **characterized in that** it comprises a portion (101) defining a bearing surface near each of the ends of the said rear edge.

9. Motor vehicle cradle according to any one of Claims 1 to 8, including at least one shell (1) comprising at least one base surface (14) having a boss (141) near at least one of its edges, termed the proximal edge (1511), of the said base surface (14), the said boss (141) being formed on a face, termed the internal face, of the said base surface (14), **characterized in that** the said shell is obtained by a method comprising:
- at least one pressing step during which the said boss (141) is produced;
- at least one step of bending the said proximal edge (1511) towards the said boss (141) until the said proximal edge (1511) runs more or less parallel to the said internal surface, the said bending step being performed by exerting an opposing restraining force on the opposite face to the said internal surface of the said base surface (14) near the said proximal edge (1511).

10. Motor vehicle cradle according to Claim 9, **characterized in that** the said proximal edge (1511) is one of the edges of an aperture (151) intended to form a passage for an engine suspension link.

11. Motor vehicle cradle according to Claims 9 and 10, **characterized in that** it comprises two shells (1), (4) assembled with one another and each having a boss (141), (142) intended to form a bearing surface for one end of the said link, the lower (1512) and upper (1511) edges of the said aperture (151) both being bent more or less parallel to the base surface of the shell near which they lie.

12. Cradle shell (1) of the pressed sheet type having a rear edge intended to be mounted near an essentially vertical wall, (100) of the body, **characterized in that** at least one portion (101) of the said rear edge of the said shell (1) defines a bearing surface capable of coming into contact, when the said vehicle absorbs an impact, with the said essentially vertical wall (100) of the body.

13. Vehicle equipped with at least one cradle comprising at least one pressed sheet shell (1) having a rear edge intended to be mounted near an essentially vertical wall (100) of the body, **characterized in that** at least a portion (101) of the said rear edge of the said shell (1) or of one of the said shells defines a bearing surface capable of coming into contact, when the said vehicle absorbs an impact, with the said essentially vertical wall (100) of the body.

## Patentansprüche

1. Kraftfahrzeugträger des Typs, der wenigstens eine Schale (1) aus gepresstem Blech enthält, die einen hinteren Rand aufweist, der dazu bestimmt ist, in der Nähe einer im Wesentlichen vertikalen Wand (100) der Karosserie angebracht zu werden, **dadurch gekennzeichnet, dass** wenigstens ein Abschnitt (101) des hinteren Randes der Schale (1) oder einer der Schalen eine Abstützoberfläche definiert, die bei einem Stoß, den das Fahrzeug erfährt, mit der im Wesentlichen vertikalen Wand (100) der Karosserie in Kontakt gelangen kann.

2. Kraftfahrzeugträger nach Anspruch 1, **dadurch gekennzeichnet, dass** die Schale (1) eine Kante (11) aufweist, die eine Zusammenfügungsebene mit einer anderen Schale (4) definiert, und dass der oder die Abschnitte (101) jeweils wenigstens einem in der Kante (11) ausgebildeten Vorsprung entsprechen.

3. Kraftfahrzeugträger nach Anspruch 2, **dadurch gekennzeichnet, dass** der Vorsprung durch eine Verformung des hinteren Randes gebildet ist, derart, dass der oder die Abschnitte (101) im Wesentlichen U-förmig sind.

4. Kraftfahrzeugträger nach Anspruch 3, **dadurch gekennzeichnet, dass** die U-Form des oder der Abschnitte (101) zwei Säulen aufweist, die miteinander durch einen im Wesentlichen ebenen oberen Rand (1011) verbunden sind.

5. Kraftfährzeugträger nach einem der Ansprüche 3 und 4, **dadurch gekennzeichnet, dass** sich der Vorsprung oder die Vorsprünge zwischen dem oder den Abschnitten (101) und der Basisoberfläche (14) der Schale (1) erstrecken, derart, dass das U und die Basisoberfläche (14) durch wenigstens eine Linie verbunden sind, die im Wesentlichen in der Ebene der Basisoberfläche (14) liegt.

6. Kraftfahrzeugträger nach einem der Ansprüche 2 bis 5, **dadurch gekennzeichnet, dass** der Vorsprung oder die Vorsprünge einen progressiven Querschnitt aufweist, der sich in Richtung der Basisoberfläche (14) erweitert.

7. Kraftfahrzeugträger nach einem der Ansprüche 2 bis 6, **dadurch gekennzeichnet, dass** die Basisoberfläche (14) und die Zusammenfügungskante (11) durch eine Verbindungswand (15) verbunden sind und dass der Vorsprung oder die Vorsprünge durch zwei gekrümmte Oberflächen (1013) gebördelt sind, die den Vorsprung mit der Verbindungswand (15) verbinden.

8. Kraftfahrzeugträger nach einem der Ansprüche 1 bis 7, **dadurch gekennzeichnet, dass** er einen Abschnitt (101) aufweist, der eine Abstützoberfläche in der Nähe jedes der Enden des hinteren Trägers definiert.

9. Kraftfahrzeugträger nach einem der Ansprüche 1 bis 8, der wenigstens eine Schale (1) enthält, die wenigstens eine Basisoberfläche (14) aufweist, die eine Erhebung (141) in der Nähe wenigstens eines der Ränder der Basisoberfläche (14), des so genannten proximalen Randes (1511), aufweist, wobei die Erhebung (141) auf einer so genannten inneren Seite der Basisoberfläche (14) ausgebildet ist, **dadurch gekennzeichnet, dass** die Schale durch ein Verfahren erhalten wird, das enthält:
- wenigstens einen Pressschritt, in dessen Verlauf die Erhebung (141) verwirklicht wird;
- wenigstens einen Schritt des Umbiegens des proximalen Randes (1511) in Richtung der Erhebung (141), bis sich dieser proximale Rand (1511) im Wesentlichen parallel zu der inneren Oberfläche erstreckt, wobei der Umbiegeschritt ausgeführt wird, indem in der Umgebung des proximalen Randes (1511) eine Gegenabstützkraft auf die der inneren Oberfläche der Basisoberfläche (14) gegenüberliegende Seite ausgeübt wird.

10. Kraftfahrzeugträger nach Anspruch 9, **dadurch gekennzeichnet, dass** der proximale Rand (1511) einer der Ränder eines Fensters (151) ist, das dazu bestimmt ist, einen Durchgang für einen Aufhängungsschwingarm eines Motors zu bilden.

11. Kraftfahrzeugträger nach den Ansprüchen 9 und 10, **dadurch gekennzeichnet, dass** er zwei Schalen (1), (4) aufweist, die zusammengefügt sind und jeweils eine Erhebung (141), (142) aufweisen, die dazu bestimmt ist, eine Abstützoberfläche für ein Ende des Schwingarms zu bilden, wobei sowohl die Unterkante (1512) als auch die Oberkante (1511) des Fensters (151) im Wesentlichen parallel zu der Basisoberfläche der Schale, in deren Nähe sie sich erstrecken, umgebogen sind.

12. Schale (1) für Träger des Typs aus Pressblech, die einen hinteren Rand aufweist, der dazu bestimmt ist, in der Nähe einer im Wesentlichen vertikalen Wand (100) der Karosserie angebracht zu werden, **dadurch gekennzeichnet, dass** wenigstens ein Abschnitt (101) des hinteren Randes der Schale (1) eine Abstützoberfläche definiert, die bei einem Stoß, den das Fahrzeug erfährt, mit der im Wesentlichen vertikalen Wand (100) der Karosserie in Kontakt gelangen kann.

13. Fahrzeug, das mit wenigstens einem Träger ausgerüstet ist, der wenigstens eine Schale (1) aus Pressblech enthält, die einen hinteren Rand aufweist, der dazu bestimmt ist, in der Nähe einer im Wesentlichen vertikalen Wand (100) der Karosserie angebracht zu werden, **dadurch gekennzeichnet, dass** wenigstens ein Abschnitt (101) des hinteren Randes der Schale (1) oder einer der Schalen eine Abstützoberfläche definiert, die bei einem Stoß, den das Fahrzeug erfährt, mit der im Wesentlichen vertikalen Wand (100) der Karosserie in Kontakt gelangen kann.
